# EUROPEAN PATENT APPLICATION

(11) **EP 2 584 432 A1**
(43) Date of publication of application: **24.04.2013**
(21) Application number: 11185816.3
(22) Date of filing: 19.10.2011
(51) Int. Cl.: G06F 3/02, G06F 3/041, G06F 3/044, G06F 3/033, G06F 1/16

(54) **Keypad apparatus having proximity and pressure sensing**

(71) Applicant: Research In Motion Limited, Waterloo, ON N2L 3W8 (CA)
(72) Inventor: Los, Oleg, Rolling Meadows IL 60008 (US); Szczypinski, David Kazmierz, Rolling Meadows IL 60008 (US)
(74) Representative: Noble, Nicholas

(57) **Abstract**

Keypad apparatus and methods are described herein. An example keypad includes a dome-switch assembly having a dome aligned relative to a first trace pattern and a second trace pattern of a printed circuit board and a key aligned with the dome. The key is depressible between an initial position, an intermediate position and a depressed position, where the key is to deflect the dome to electrically couple the first and second trace patterns when the key is in the depressed position. A touch sensing film detects a touch on a keycap of the key when the key is in the initial position and a pressure sensing film detects a force on the keycap when the key is in the intermediate position.

## Description

### FIELD OF DISCLOSURE

The present disclosure relates to mobile devices, including but not limited to, keypad apparatus and methods to detect proximity and pressure-sensing.

### BACKGROUND

Electronic devices, including portable electronic devices, have gained widespread use and may provide a variety of functions including, for example, telephonic, electronic messaging, and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth capabilities.

Often these portable electronic devices include physical keypads (e.g., depressible keys, plastic keys, etc.) to input information such as data entry and display control. One benefit of a physical keypad is that it typically provides tactile feedback to a user. The tactile feedback from the keypad can be provided in a variety of ways including the use of one or more collapsible dome switches associated with or corresponding to one or more depressible keys of a keypad.

However, smaller devices are generally desirable for portability. As a result, using a keypad for all types of data entry and display control may be inefficient, slow, and/or cumbersome to a user. Also, physical keypads often provide relatively small sized keys, which can make it difficult for a user to see which key is being depressed. In some known devices, users often rely on a combination of tactile registration and/or spelling correction software when typing a message via a known keypad of an electronic device. Further, unlike touch-sensitive displays that can detect proximity and/or pressure sensing, physical keypads have limited amounts of functionality due to their mechanical features (e.g., dome-switches). However, touch-sensitive displays are relatively expensive compared to the physical keypads and generally do not provide tactile response to the user.

### BRIEF DESCRIPTION OF THE DRAWINGS

FIG. 1 is a block diagram of an example portable electronic device in accordance with the disclosure.

FIG. 2 is an example portable electronic device of FIG. 1 implemented with an example keypad apparatus described herein.

FIG. 3 is perspective view of an example keypad apparatus that can be used to implement the electronic device of FIG. 1.

FIG. 4 is a cross-sectional view of the example keypad apparatus of FIG. 3.

FIG. 5 is a plan view of a portion of the example keypad apparatus of FIG. 3 and FIG. 4.

FIG. 6 illustrates a key of the example keypad apparatus of FIGS. 3-5 in a first mode of operation.

FIG. 7 illustrates the key of the example keypad apparatus of FIGS. 3-5 in a second mode of operation.

FIG. 8 illustrates the key of the example keypad apparatus of FIGS. 3-5 in a third mode of operation.

FIG. 9 is a cross-sectional view of another example keypad apparatus described herein.

FIG. 10 is a cross-sectional view of yet another example keypad apparatus described herein.

FIG. 11 illustrates another example keypad apparatus described herein.

FIG, 12 illustrates yet another example keypad apparatus described herein.

FIG, 13 illustrates yet another example keypad apparatus described herein.

FIG. 14 illustrates an example pressure sensor described herein that can be used with an example keypad apparatus described herein.

### DETAILED DESCRIPTION

Example keypad apparatus and methods described herein provide rapid data entry and/or graphical display control. An example keypad assembly described herein combines a dome switch keypad assembly with a touch sensor and/or a pressure sensor for providing various operations based on proximity and/or pressure sensing while maintaining keypad tactility. In general, an example keypad apparatus described herein can provide three different modes of operation; a first mode of operation to detect proximity, a second mode of operation to detect a pressure, and/or a third mode of operation to provide tactility. An example keypad described herein can be used to implement a portable electronic device such as, for example, a cellular device.

An example keypad apparatus described herein may employ a touch sensor disposed underneath one or more keycaps of the keypad assembly to provide a touchpad-like functionality or capability to the keypad assembly. In particular, the example keypad assembly does not require a separate touchpad surface. For example, the keycaps of the keypad assembly can be used to navigate a graphical user interface presented on a display in the electronic device without having to depress the keycap. The touch sensor may operate through proximity sensing and, thus, may not require direct contact with a surface of the touch sensor to operate. For example, the touch sensor can detect a finger of a user on a keycap of the keypad assembly. The touch sensor can be used for data entry, cursor control, scroll bar control on a display, etc. Thus, when the touch sensor is activated, the touch sensor provides a first user input or mode of operation.

Additionally or alternatively, the keypad assembly may employ a pressure sensor (e.g., a pressure sensing ink) to detect a force, strain or pressure when the keycap is deflected (e.g., partially deflected). The pressure sensor may be, for example, a pressure sensitive ink to detect a finger push. A pressure detected that is less than a predetermined threshold value and greater than a zero value for a predetermined duration may activate the pressure sensor. Various suitable thresholds may be programmed via a processor of the electronic device to activate the pressure sensor. In some examples, activation of the pressure sensor may deactivate the touch sensor so that the touch sensor does not interfere with the operation of the pressure sensor. The pressure sensor can provide data entry, cursor control, scroll bar control on a display, etc. Thus, when the pressure sensor is activated, the keypad apparatus provides a second user input or mode of operation.

To provide tactile feedback and generate an electrical signal when a key of the keypad is activated, the keypad apparatus employs an electrical switch. An example electrical switch described herein may include one or more collapsible dome switches associated with, or corresponding to, depressible keys of a keypad and contacts of a printed circuit board. For example, the dome switch collapses toward the contact of the printed circuit board to generate an electrical signal when a key is activated. Thus, when a key of the keypad assembly is depressed or activated to collapse the dome switch, the key provides a third user input or mode of operation.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the examples described. The description is not to be considered as limited to the scope of the examples described herein.

The disclosure generally relates to electronic devices such as, for example, a portable electronic device in the examples described herein. Examples of portable electronic devices include mobile, or handheld, wireless communication devices such as pagers, cellular phones, cellular smart-phones, wireless organizers, personal digital assistants, wirelessly enabled notebook computers, tablets (e.g., Ipads) and so forth. The portable electronic device may also be a portable electronic device without wireless communication capabilities, such as a handheld electronic game device, digital photograph album, digital camera, or other device.

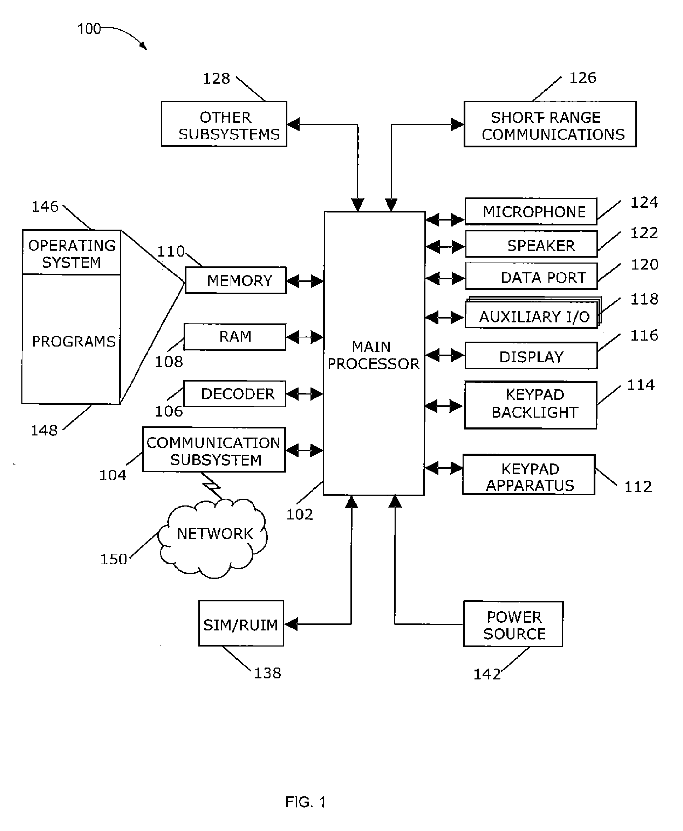

A block diagram of an example portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a keypad apparatus 112, a keypad backlight system 114, a display 116, an auxiliary input/output (I/O) subsystem 118, a data port 120, a speaker 122, a microphone 124, short-range communications subsystem 126, and other device subsystems 128. Userinteraction with a graphical user interface is performed through the display 116 and the keypad apparatus 112. In some examples, the display 116 may be a touch-sensitive display. Information, such as text, characters, symbols, images, icons, and other items that may be displayed or rendered on a portable electronic device, is presented on the display 116 via the processor 102.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 118, the data port 120, the short-range communications subsystem 126, or any other suitable subsystem 128.

A received signal such as a text message, an e-mail message, or web page download is processed by the communication subsystem 104 and input to the processor 102. The processor 102 processes the received signal for output to the display 116 and/or to the auxiliary I/O subsystem 118. A subscriber may generate data items, for example e-mail messages, which may be transmitted over the wireless network 150 through the communication subsystem 104. For voice communications, the overall operation of the portable electronic device 100 is similar. The speaker 122 outputs audible information converted from electrical signals, and the microphone 124 converts audible information into electrical signals for processing.

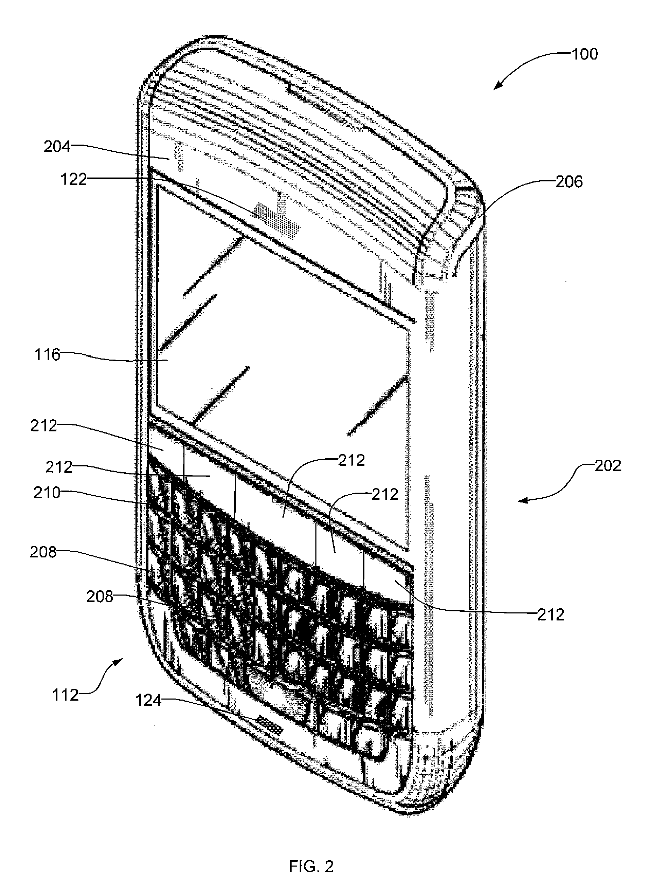

FIG. 2 is a perspective view of the portable electronic device 100 of FIG. 1. In the example of FIG. 2, the portable electric device 100 is a handheld communication device or mobile phone. As mentioned above, the electronic device may be a data and/or voice-enabled handheld device that may be used to send and receive a message, a voice communication, a textual entry, etc. Referring to FIG. 2, the electronic device 100 includes a housing 202 that encloses the electronic or mobile components described above in connection with FIG. 1. For example, the housing 202 encloses the microprocessor 102, the display 116, the keypad apparatus 112, the speaker 122, the microphone 124, etc. The housing 202 may include a front cover or lid 204 that couples to a frame or base 206 to capture the electronic components within the housing 202. The housing 202 of the illustrated example can be held in one hand by a user of the electronic device 100 during data (e.g., text) and/or voice communications.

In the example of FIG. 2, the display 116 is located adjacent or above the keypad apparatus 112. To provide a user input and accommodate textual inputs to the electronic device 100, the keypad apparatus 112 includes a plurality of keys or key switch assemblies 208. When assembled with the housing 202, each of the keys 208 is positioned within an opening 210 of the front cover 204 and projects from the front cover 204. The keys 208 enable character inputs including alphabetical and/or numeric entries to allow text and/or numeric entry for various functions. For example, the keypad apparatus 112 may be a QWERTY style keypad, a SureType keypad, or any other suitable keypad(s).

In this example, the electronic device 100 also includes function keys 212. For example, the function keys 212 may include an on/off button or call end button, a call send button, a menu button, an escape key, etc.

A user interacts with the electronic device 100 via the keys 208 and/or the function keys 212 of the keypad apparatus 112 to choose commands, execute application programs, and perform other functions by selecting menu items or icons. Additionally or alternatively, in other examples, the electronic device 100 may include a touch screen display. In combination with the keypad apparatus 112, a user may interact with the electronic device 100 via the touch screen display to choose commands, execute application programs, and perform other functions by selecting menu items or icons by contacting or touching the icon or image via the touch screen. Further, in other examples, the function keys 212 may be disposed on an upper housing of an electric device that moves relative to a lower housing of the electric device, where the keypad apparatus 112 is disposed within the lower housing and the display 116 or a touch-sensitive display is disposed within the upper housing (not shown).

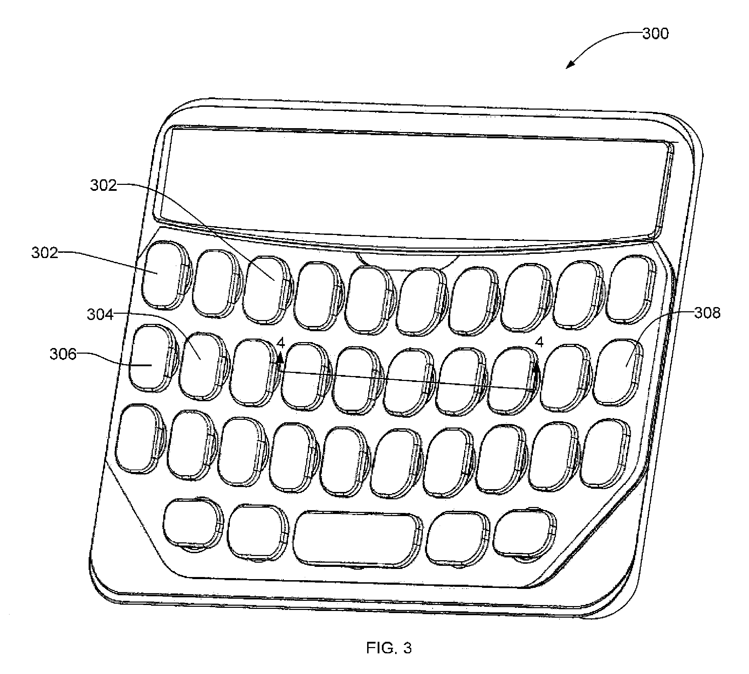

FIG. 3 illustrates a perspective view of an example keypad apparatus 300 that may be used to implement the example keypad apparatus 112 of the electronic device 100 of FIG. 1 . The keypad apparatus 300 of the illustrated example includes a plurality of keycaps 302. As described in greater detail below, the keypad apparatus 300 may provide a first mode of operation when a keycap 304 is in an initial or non-depressed position, a second mode of operation when a keycap 306 is in an intermediate position (e.g., a partially depressed position) and/or a third mode of operation when a keycap 308 is in a depressed position (e.g., a fully depressed position). Alternatively, in other examples, the keypad apparatus 300 may provide only the first and second modes of operation, or the second and third modes of operation.

Although not shown, the keycaps 302 may include indicia or graphics representing different (e.g., alphanumeric) character inputs. The graphic portion or indicia of the keycaps 302 may be composed of a transparent or translucent material or layer (or a semi-transparent or semi-translucent material) and a nongraphic portion of the keycaps 302 may be composed of an opaque material or layer.

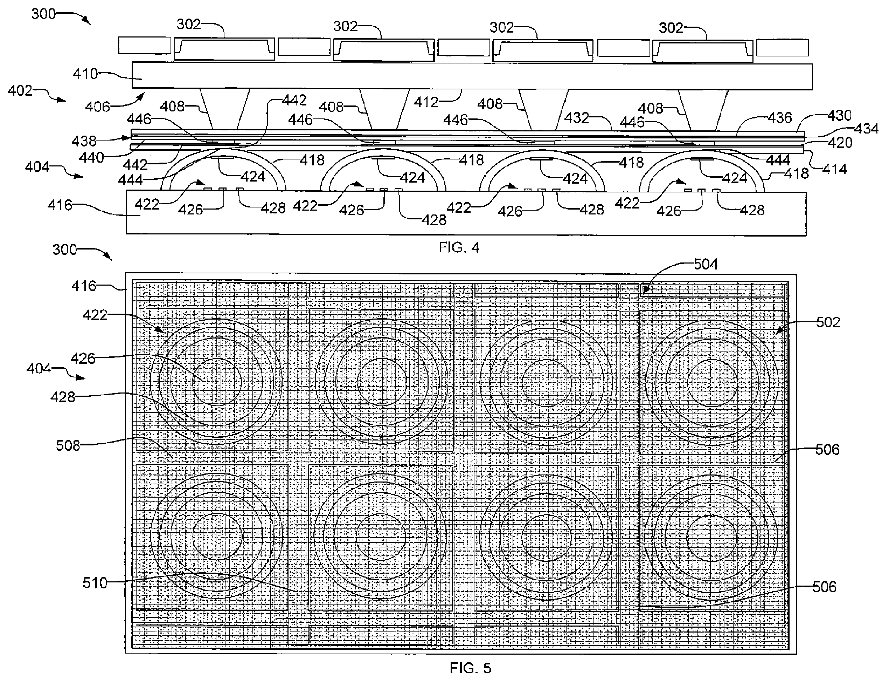

FIG. 4 illustrates a cross-sectional view of the example keypad apparatus 300 of FIG. 3. The keypad apparatus 300 of the illustrated example includes an actuator assembly 402 positioned above or over an electrical switch 404. The actuator assembly 402 interacts with the electrical switch 404 to generate an electrical signal when a user depresses one of the respective keys associated or corresponding to the electric switch 404.

The actuator assembly 402 of the illustrated example includes a keyweb or rubber-like pad 406. In the illustrated example, the keyweb 406 is a relatively thin layer that includes a plurality of plungers, actuators or dome shaped members 408 that are interconnected via a sheet 410 (e.g., a rubber sheet). In the illustrated example, each of the actuators 408 protrudes from a surface 412 of the sheet 410, and is associated with respective ones of the keycaps 302.

The electrical switch 404 of the illustrated example includes a dome sheet 414 that is positioned above a printed circuit board 416 (e.g., a flexible printed circuit board). The dome sheet 414 interconnects a plurality of dome switches 418 that protrude toward the printed circuit board 416. In this example, the number of dome switches 418 corresponds to the number of actuators 408 such that each of the keys of the keypad apparatus 300 is associated with a single dome switch 418. The dome switches 418 may be provided in a grid pattern and may be spaced (e.g., evenly, unevenly, etc.) relative to one another. Also, in this example, each of the dome switches 418 is aligned with a respective one of the actuators 408 and the keycaps 302. Alternatively, more than one key may be associated with each of the dome switches 418 and a predictive text or other software program or hardware may be utilized to determine the desired text. In those examples, the dome switches 418 may be offset relative to the actuators 408 and/or the keycaps 302.

In the illustrated example, the dome switches 418 are elastically deflectable between a relaxed position and a deflected position. In this example, the dome switches 418 are metal springs composed of, for example, a thin platelike metallic material and are formed into a dome-like shape and act as a conductor. Each of the dome switches 418 may be formed by a tact spring having elasticity that snaps when pressed to provide a tactile feedback to a user. In this example, the dome switches 418 are integrally formed with the dome sheet 414. A dome sheet carrier 420 (e.g., a thin film) is disposed over the dome sheet 414 and the dome switches 418 to couple the dome sheet 414 and the dome switches 418. The dome sheet carrier 420 may be, for example, polyester or plastic material (e.g. Mylar^{®}) or any other transparent or semi-transparent resinous film.

The dome switches 418 are positioned above or on top of trace patterns 422 of the printed circuit board 416 so that a conductive contact surface 424 (e.g., an apex) of each of the dome switches 418 is aligned relative to conductive contacts 426 and 428 of the respective trace patterns 422.

To detect proximity or a touch when a user hovers over one or more keycaps 302, the example keypad apparatus 300 may include a proximity or touch sensor 430. Proximity sensing enables detection of a pointing object on the plurality of keycaps 302. In some examples, the touch sensor 430 may be, for example, a proximity-based capacitance-sensitive touch sensor that is disposed between the keycaps 302 and the printed circuit board 416 of the keypad assembly 112 to detect or determine the location of an object (e.g., a finger) that is over and/or not touching a sensing surface 432 of the touch sensor 430. For example, when the keycap 302 is not touched, an electric capacitance is not generated or is relatively low. However, an electric capacitance is generated when, for example, a user's finger touches the keycap 302. A circuit, for example, measures an increase in the electric capacitance between the non-touch and touch conditions to detect an approaching object. Alternatively, in some examples, the touch sensor 430 may be a mutual capacity detection sensor having a reception electrode and a transmission electrode between which an electric field is generated. In this example, the mutual capacitance sensor measures a charge according to a decrease in the electric field from a non-touch condition to a touch condition.

In the example illustrated in FIG. 4, the touch sensor 430 is disposed between the actuators 408 and the dome sheet 414. In this example, the actuators 408 engage the sensing surface 432 of the touch sensor 430. The actuators 408 and/or the keyweb 406 may be composed of an electrostatic conductive plastic, rubber and/or any other electrostatic conductive material(s). In other examples, the touch sensor 430 may be disposed adjacent the printed circuit board 416, adjacent the keyweb 406, above the actuators 408and beneath the keycaps 302 and/or any other suitable location between the keycaps 302 and the printed circuit board 416. For example, positioning the touch sensor 430 closer to the keycap 302 may increase a sensitivity of the touch sensor 430. In some examples, an insulation material 434 is disposed on a surface 436 of the touch sensor 430 facing the printed circuit board 416. The insulation material 434 insulates the touch sensor 430 from the trace patterns 422 of the printed circuit board 416 (e.g., the voltage of the electric switch 404) to prevent interference with the operation of the touch sensor 430 (e.g., increase the accuracy of the touch sensor 430). Thus, when a user touches the keycap 302 with his finger, a stylus and/or other apparatus, the printed circuit board 416 does not interfere with and/or affect the accuracy of the touch sensor 430. The touch sensor 430 is described in greater detail in connection with FIG. 5.

To detect a pressure when a user deflects one or more of the keycaps 302, the example keypad apparatus 300 includes a pressure sensor 438. In general, the pressure sensor 438 may be a tactile sensor, a matrix sensor, pressure sensing traces and/or pressure sensitive inks printed or formed on, for example, a substrate or flexible printed circuit board. For example, the pressure sensor 438 may be a pressure sensitive ink that is printed on a support, film or layer material 440 such as, for example, a Mylar^{®} film. In some examples, the pressure sensor 438 may be directly coupled and/or printed onto a surface 442 of the dome sheet carrier 420. Alternatively, the pressure sensor 438 may be composed of conductive material (e.g., molded plastic material having conductive filler material) that moves relative to and/or engages a printed circuit board or conductive traces when a pressure or load is applied to a keycap 302, As shown, the dome sheet carrier 420 is disposed adjacent an apex portion 444 of the dome switches 418 and the dome switches 418 protrude away from the dome sheet carrier 420 toward the printed circuit board 416.

The pressure sensor 438 outputs a pressure sensitivity pattern (such as a change in resistance) that varies (e,g., gradually, linearly, continuously, etc.) as a function of a force or pressure applied to the keycaps 302. For example, the pressure sensitive resistant inks are materials of which resistance values vary depending on pressure and/or contact surface area. In some examples, the pressure sensitive inks measure a change in resistance that can vary linearly in terms of conductance vs. force under an applied load. For example, the pressure sensor 438 may exhibit a decrease in resistance when increased pressure is applied to the pressure sensor 438.

Thus, when a force is not applied to the keycaps 302, a resistance output value of the pressure sensitive ink may have no change and/or provide a certain value, threshold or range. For example, when a force is not applied to the keycaps 302, a resistance output value provided by the pressure sensor 438 may be relatively large (e.g., 1 mega ohm). A control circuit can detect the resistance output (e.g., an open circuit) and the processor 102 can receive the signal to determine the state of the keycap 302.

When a force is applied to the keycaps 302 and/or the magnitude of the force increases, a resistance output value of the pressure sensitive ink may change and/or provide a certain value, threshold or range. For example, when a force is applied to the keycaps 302, a resistance output value of the pressure sensor 438 may be relatively small (e.g., 1 kilaohms). A control circuit senses or detects the change (e.g., a significant drop) in the resistance output value (e.g., an closed circuit) and sends the signal or value to the processor 102, which detects the location of the force being applied to the pressure sensor 438 corresponding to a depressed keycap 302.

To detect deflection of each individual keycap 302 of the keypad apparatus 300, the pressure sensitive inks can be printed in a pressure sensing pattern or matrix (e.g., an X-Y grid). For example, the pressure sensitive ink may include grid-like traces (X-Y coordinate grid), a matrix and/or a plurality of nodes. Each trace grid and/or node is representative or associated with (e.g., substantially aligned with) one of the domes and/or actuators. The processor 102 may include pressure-mapping detection software to enable detection of a force imparted over a given area representative of the keys of the keypad apparatus 300. In this manner, the pressure at which the keycap 302 is touched and/or deflected may be determined or detected by the pressure sensor 438. When deflected, the pressure sensor 438 generates a signal that is sent to the processor 102.

In operation, the deflection of the keycap 302 causes the traces of the pressure sensitive ink to reduce the resistance output, thereby allowing the processor 102 to detect the particular keycap 302 or key associated with the trace that is providing a reduced resistance output. To provide a closed control circuit and/or to change the output resistance of the pressure sensitive ink of the pressure sensor 438 when the keycap 302 is deflected, the example pressure sensor 438 includes a puck or plunger 446 disposed between the dome switches 418 and the pressure sensitive ink of the pressure sensor 438. The puck 446 is composed of a pressure sensitive flexible material such as, for example, the material in which the pressure sensitive ink is composed. When one of the keycaps 302 is deflected, the puck 446 engages the traces of the pressure sensor 438 and "shorts" the circuit between the traces of the pressure sensitive ink causing a change in resistance. A control circuit senses or measures the change in resistance and sends a signal to the processor 102, which detects the location of the applied force.

Additionally or alternatively, the control circuit (e.g., an algorithm) may detect a pressure or force applied over a relatively large area that covers multiple keys or keycaps 302. For example, the control circuit may determine which keycap 302 or key is centered in the detected area or which keycap 302 is under the largest amount of pressure or load.

FIG. 5 illustrates a plan view of the example keypad apparatus 300 of FIG. 4. As shown in FIG. 5, the example touch sensor 430 is a proximity or capacitive sensing film 502 having a conductive sensing pattern 504. For example, the capacitive sensing film 502 may have a network of traces 506. The conductive sensing pattern 504 may be composed of copper, gold and/or any other material for conducting electricity disposed on, for example, a flexible printed circuit board. One example capacitive sensing film 502 is an Indium Tin Oxide film or sheet. The touch sensor may also be copper or any other conductive traces embedded into a dielectric substrate.

In the illustrated example, the capacitive sensing film 502 is a single substrate or film (e.g., a flexible printed circuit board) that has two or more capacitive sensing patterns or traces 508 and 510 disposed thereon to provide, for example, two-dimensional capacitive sensing. For example, the capacitive sensing traces 508 may include one or more horizontal capacitive sensing traces and the capacitive sensing traces 510 may include one or more vertical capacitive sensing traces. For example, the horizontal and vertical traces form an X-Y grid. In other examples, the touch sensor 430 (e.g., a capacitive sensor) may include rhombusshaped traces or patterns and/or any other shape patterns.

The touch sensor 430 enables detection of a finger changing the capacitance between the one or more of the capacitive sensing traces 508 and 510. A touch sensor circuit (not shown) may detect the change in capacitance output to detect the location of the user's finger relative to the keypad apparatus 112. For example, the processor 102 may process the location of the X and Y coordinates representative of the capacitive sensing traces 508 and 510 to detect the particular key of the keypad apparatus 300 that a user's finger is touching. Each of the capacitive sensing traces 508 and 510 are electronically coupled to the processor 102 via a flex (not shown).

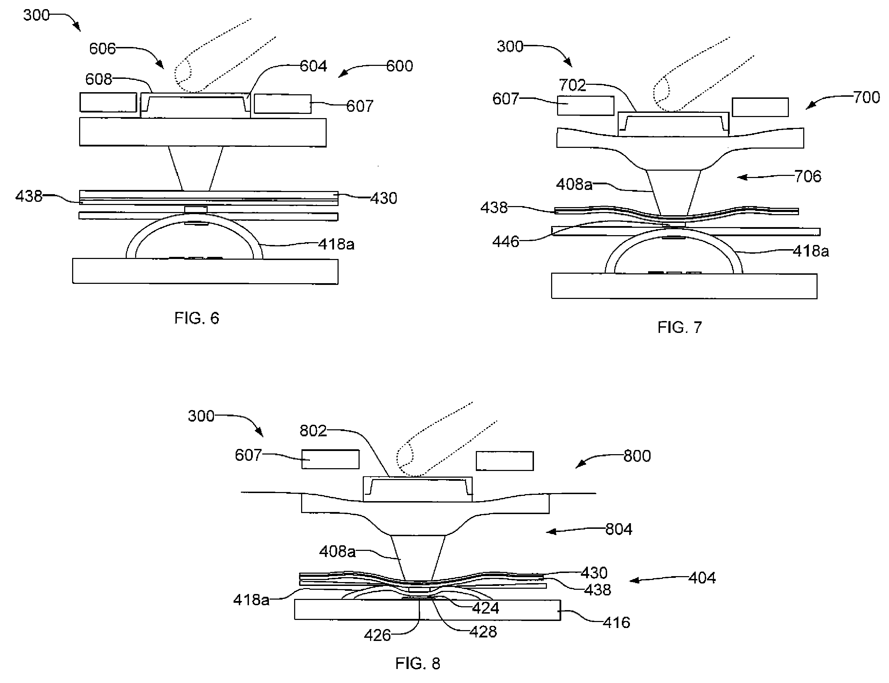

FIG. 6 illustrates the keypad apparatus 112 in a first mode of operation 600. The first mode of operation 600 is associated with sensing the proximity of an object to be sensed (e.g., a user's finger).

For example, in the first mode of operation 600, the electronic device 100 detects or senses a proximity or touch on a keycap 604 of the keypad apparatus 300 when the keycap 604 is in a first or initial position 606 relative to a front cover 607 of the electronic device 100. In particular, the touch sensor 430 detects the object that engages or contacts an upper or outer surface 608 of the keycap 604. The touch sensor 430 may detect simultaneous touches on two or more keycaps 302 of the keypad apparatus 300. A control circuit measures a capacitance provided by the capacitive sensing traces 508 and 510 printed on the capacitive sensing film 502 of the touch sensor 430. When the object engages or is adjacent the keycap 604, the object modifies the capacitance measured by a control circuit, which is electronically coupled to the capacitive sensing traces 508 and 510 via, for example, a flex. It should be noted that in the first mode of operation 600, detecting the proximity of the object does not require the object touching or being in contact with the sensing surface 432 and/or touch sensor 430.

In the first mode of operation 600, for example, the keypad apparatus 112 provides a first user input or touch pad via the touch sensor 430. A user may use the keypad apparatus 300 as a touch pad, a track pad, a mouse and/or other input device(s). In some examples, a user may swipe or glide his finger across the keycaps 302 of the keypad apparatus 300 to use the keypad apparatus 300 as a touch pad. In other examples, the keycaps 302 and/or the keypad apparatus 300 may be used for finger gesture recognition, preview a key being touched, handwriting recognition, navigation, zooming in images, scrolling activities, etc.

For example, a user may tap the keycap 604 to scroll through a plurality of characters, symbols or numbers associated with the particular key associated with the keycap 604. For example, in a text message application, a user may use the surface 608 of each of the keycaps 302 to input characters by gesturing the character on the keycaps 302 of the keypad apparatus 300 without having to activate the electrical switch 404. In some examples, in a messaging application, a user may use keypad apparatus 300 to preview or enlarge a character on the display 116 that is associated with the keycap 604 being engaged by the object.

Additionally, the material of the keycaps 302 and/or the actuators 408 does not interfere with the operation of the touch sensor 430 and/or the pressure sensor 438. For example, the keys do not interfere with the detection of capacitance between capacitive sensing traces 508 and 510 of the touch sensor 430 and the object.

In operation, the position at which the object touches the keypad apparatus 300 is determined or detected by the touch sensor 430. A control circuit (not shown) senses a signal generated by the touch sensor 430 is in accordance with a change in capacitance provided by the capacitive sensing traces 508 and 510 and/or the X-Y coordinates.

FIG. 7 illustrates the keypad apparatus 300 in a second mode of operation 700. In this example, the second mode of operation 700 is associated with sensing a pressure exerted on the pressure sensor 438 by, for example, an actuator 408a when a keycap 702 is depressed by a user.

For example, in the second mode of operation 700, the electronic device 100 detects or senses a force or deflection on the keycap 702 of the keypad apparatus 300 when the keycap 702 is in an intermediate position 706 relative to the front cover 607. The intermediate position 706 may be a position between the initial position 606 and a fully deflected position 804 (FIG. 8) that activates the dome switch 418a. When the keycap 702 is deflected to the intermediate position 706, pressure sensor 438 engages or touches the puck 446, which contacts traces of the pressure sensing ink of the pressure sensor 438 to create a short (e.g., close the circuit) and change a measured resistance output measured by a circuit. In turn, the processor 102 detects a change in the resistance output when the pressure sensing ink or pressure sensor 438 engages the puck 446 and activates the second mode of operation 700. In some examples, the processor 102 may deactivate the touch sensor 430 upon activation of the pressure sensor 438.

In the second mode of operation 700 of FIG. 7, a user, for example, may deflect the keycap 702 to the intermediate position 706 to cycle through a plurality of key options such as, for example, characters, symbols, numbers, etc, associated or assigned to the key. In some examples, the keycap 702 may be deflected to activate a shift command to capitalize the character associated or assigned to the particular keycap 702. In some examples, both the touch sensor 430 and/or the pressure sensor 438 can be used to highlight otherwise hidden user interface elements presented by the graphical user interface via the display 116 and the pressure sensor 438 may be used to scroll and/or select one or more of the user interface elements presented by the graphical user interface.

FIG. 8 illustrates the keypad apparatus 300 in a third mode of operation 800. In the third mode of operation 800, for example, the electronic device 100 detects or senses a deflection or activation of the electrical switch 404 when a keycap 802 is in a depressed position 804 relative to the front cover 607 (e.g., a fully depressed position).

In the position 804, the keycap 802 causes the deflection of the touch sensor 430 along with the pressure sensor 438 and the keyweb 406, which results in the corresponding actuator 408a actuating one or more dome switches 418a. The touch sensor 430 and/or pressure sensor 438 are thin, flexible members (e.g., flexible printed circuit boards) that do not inhibit or interfere with the tactile feedback provided by the dome switch 418a.

In operation, the keycap 802 moves to the depressed or actuated position 804 to activate the electrical switch 404 and generate an electrical signal. The actuator 408a of the keyweb 406 provides stiffness to hold the keycap 802 in position when the key is not pressed or actuated. On the other hand, a user can exert downward force on the keycap 802 to depress the key with relative ease. The force required to press the key is large enough that the person can feel a resistance to the pressure of their finger on the keycap 802.

To activate the key, a user depresses the keycap 802 to provide data input to the electronic device 100. In particular, the electrical switch 404 generates an output signal that is received by the processor 102 when the key is depressed by a user. For example, when a user presses the keycap 802, the actuator 408 moves toward the printed circuit board 416. The actuator 408 presses against the touch sensor 430 and the pressure sensor 438 and causes the sensors 430 and 438 to deflect, flex or bend toward the printed circuit board 416 to press or deflect the dome switch 418a. In turn, the dome switch 418a collapses toward the conductive contacts 426 and 428 such that the contact surface 424 of the dome switch 418a engages the conductive contacts 426 and 428 of the printed circuit board 416, thereby closing an electrical circuit and generating an electrical signal that is received or detected by the processor 102. When the keycap 802 is activated, a character or value associated with keycap 802 is presented on the display 116. Additionally, activating the key associated with the keycap 802 may input or confirm a selection displayed or provided (e.g., a highlighted character) when the keycap is in an intermediate position (e.g., the intermediate position 706 as shown in FIG. 7). For example, moving the keycap 802 to the intermediate position may toggle a character associated with the keycap 802 between a lower-case state and an upper-case state and moving the keycap to the actuated position 804, for example, confirms selection of the character in the upper-case state.

To return the key to the non-actuated or initial position 606 in which the electrical switch 404 is deactivated, a user releases the keycap 802. When the keycap 802 is released, the actuator 408a returns to its original position or state. The touch sensor 430 and the pressure sensor 438 return to their original state or position (e.g., a substantially non-deflected position) and release the dome switch 418a. The dome switch 418a also snaps back to its original or dome shaped position as shown in FIGS. 6 and 7. The dome switch 418a provides a tactile feedback (e.g., a force) to the user when the dome switch 418a snaps back to its original position. In particular, the dome switch 418a functions as a spring to push the actuator 408a back to the initial or non-activated position. In other examples, the example keypad apparatus 300 may only include the touch sensor 430 or the pressure sensor 438.

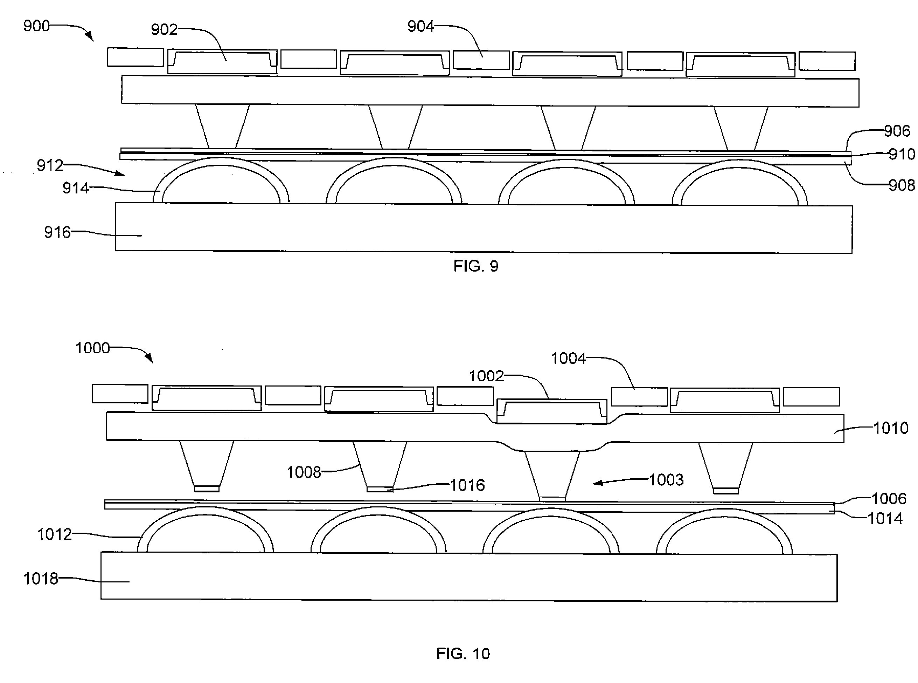

FIG. 9 illustrates another example keypad apparatus 900. Unlike the keypad apparatus 300, the keypad apparatus 900 provides two modes of operation. In particular, in the illustrated example of FIG. 9, the keypad apparatus 900 provides a first mode of operation to detect or sense proximity or touch on a keycap 902 when the keycap 902 is in a first position (e.g., the position 606) relative to a front cover or frame 904. To detect proximity, the keypad apparatus 900 includes a touch or capacitive sensor 906 disposed between the keycap 902 and a dome sheet 908. An insulation material or layer 910 is disposed between the capacitive sensor 906 and the dome sheet 908.

The keypad apparatus 900 of the illustrated example also provides a second mode of operation (not shown) to detect or sense a deflection or activation of the electrical switch 912 (e.g., a dome switch 914 of the keypad apparatus 900) when the keycap 902 is depressed relative to the front cover 204 toward a circuit board 916 (e.g., a fully depressed position).

FIG. 10 illustrates yet another keypad apparatus 1000. Unlike the keypad apparatus 300, the keypad apparatus 1000 provides two modes of operation. In particular, in the illustrated example of FIG. 10, the keypad apparatus 1000 provides a first mode of operation to detect or sense a pressure on a keycap 1002 when the keycap 1002 is in an intermediate position 1003 relative to a frame 1004. To detect a pressure, the keypad apparatus 1000 employs a pressure sensor 1006. The pressure sensor 1006 is disposed between an actuator 1008 or a keyweb 1010 and a dome switch 1012.

In the illustrated example, the pressure sensor 1006 includes pressure sensitive resistive inks that are printed on a dome sheet 1014 of the dome switch 1012. Also, in contrast to the keypad apparatus 300, the actuator 1008 of the keypad apparatus 1000 includes a puck 1016 to engage the pressure sensor 1006 when the keycap 1002 is in the intermediate position as described above. However, in other examples, the puck 1016 may be disposed between the dome sheet 1014 and the pressure sensor 1006. In operation, the puck 1016 may be a molded plastic material that includes a conductive material. For example, the puck 1016 may be composed of a plastic material that is embedded with the same material of the pressure sensitive ink. The puck 1016 may be coupled to the plunger 1008 via, for example, adhesive or may be integrally formed with the plunger 1008 as a unitary piece or structure via, for example, molding.

The keypad apparatus 1000 of the illustrated example also provides a second mode of operation (not shown) to detect or sense a deflection or activation of the dome switch 1012 when the keycap 1002 is depressed relative to the front cover 204 toward a circuit board 1018 (e.g., the fully depressed position 804).

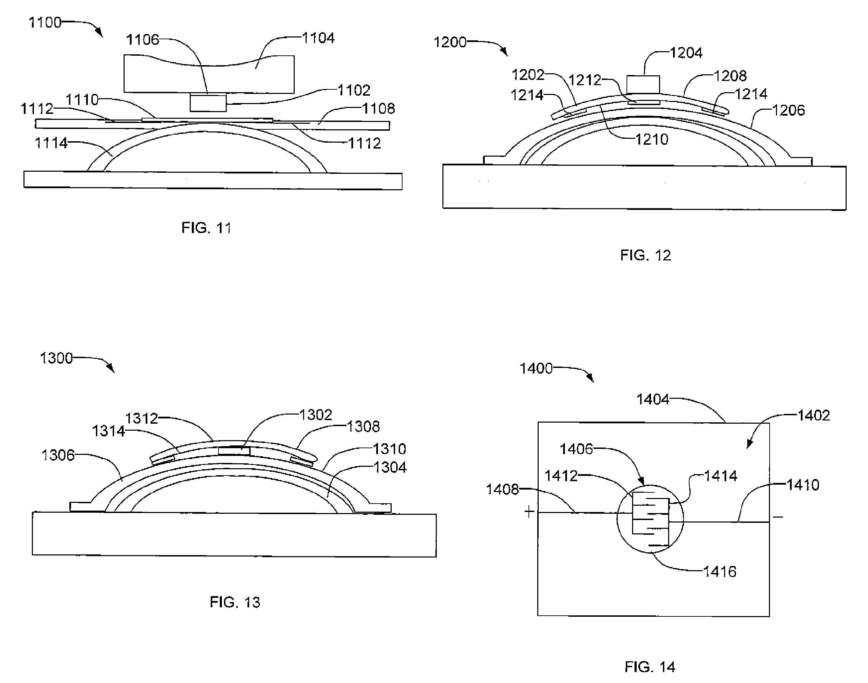

FIG. 11 illustrates another example keypad apparatus 1100 capable of sensing a pressure. In this example, a plunger 1102 (e.g., an elastomeric plunger) is coupled to a keycap 1104 via adhesive 1106. During operation of the keycap 1104, the plunger 1102 moves relative to a pressure sensor 1108. In this example, the plunger 1102 is disposed between the keycap 1104 and the pressure sensor 1108. The pressure sensor 1108 is, for example, a flexible circuit board having a pressure sensitive ink 1110 electrically coupled to traces 1112. The pressure sensitive ink 1110 may be printed on the pressure sensor 1108 and/or may be coupled to the pressure sensor 1108 via adhesive. In operation, when the keycap 1104 is not depressed or is in an initial position (as shown in FIG. 11), the plunger 1102 does not engage or contact the pressure sensor 1108.. In turn, the pressure sensor 1108 outputs a first resistance output value (e.g., a relatively large resistance output value).

Alternatively, although not shown, the plunger 1102 may be configured to engage or contact (i.e., rest on) the pressure sensor 1108 with a relatively small force or relatively small surface area when the keycap 1104 is in an initial or non-deflected position (e.g., when a force is not applied to the keycap 1104). In this alternative example, when the plunger 1102 engages the pressure sensor 1108 with a relatively small contact surface area, the pressure sensor 1108 may output the first resistance output value (e.g., the relatively large resistance output value). Thus, in the initial position, the plunger 1102 may be spaced away from the pressure sensor 1108 as shown in FIG. 11 at which the pressure sensor 1108 provides a relatively large resistive output. Alternatively, the plunger 1102 may rest on the pressure sensor 1108 in a non-deformed condition or state at which the pressure sensor 1108 can also provide a relatively large resistive output.

In either example, when a force is applied to the keycap 1104 or the plunger 1102, the increased force causes the pressure sensor 1108 to output a second resistance output value (e.g., a relatively small resistance output value). For example, the second resistance output value is significantly less than the first resistance output value. As a result, an amount of force applied to the plunger 1102 correlates or relates (e.g., in direct proportion) to the resistance output provided by the pressure sensor 1108.

For example, when the keycap 1104 is depressed, the plunger 1102 engages or contacts the pressure sensor 1108 with an increased contact surface area and/or force, causing a resistance output value of the pressure sensor 1108 to decrease. In other words, a change in force or pressure to the pressure sensitive ink 1110 provided by the plunger 1102 causes a change in resistive output provided by the pressure sensitive ink 1110.

For example, when the plunger 1102 engages the pressure sensitive ink 1110 with a relatively greater force and/or contact surface area, the plunger 1102 short circuits a greater number of resistive elements (e.g., resistors) disposed on the pressure sensor 1108 in parallel formation to cause the pressure sensor 1108 to become less resistant, thereby closing a circuit. Likewise, when the plunger 1106 is spaced away from the pressure sensitive ink or, alternatively, engages the pressure sensitive ink 1110 with a relatively smaller force and/or a smaller contact surface area, the number of resistive elements engaged by the plunger 1102 is reduced. As a result, the pressure sensitive ink 1110 provides a greater resistance and forms an open circuit.

A circuit detects the change of the resistance output value and sends a signal to the processor 102. The processor 102 determines the keycap 1104 associated with the location of the change in the resistance output. Further, the plunger 1102 centers a force that is applied to the keycap 1104 relative to a corresponding dome 1114 to prevent the dome 1114 from providing a reduced tactility that may otherwise be provided when a non-perpendicular or off center force is applied to the keycap 1104.

In some examples, to increase the contact surface area on the pressure sensor 1108 when a force is applied to the plunger 1102, the plunger 1102 may be configured to deform, flex, bend or otherwise effectively expand across the pressure sensitive ink 1110. For example, the plunger 1102 may be a resilient member having a spherical or cylindrical shape end or contact surface (e.g., a tapered-shaped end or bottom, a round-shaped end or bottom, etc.). When a pressure is applied to the plunger 1102, the contact surface of the plunger 1102 deforms or effectively expands across the pressure sensitive ink 1110 with a relatively larger contact area or footprint compared to a contact area or footprint at which the plunger 1102 engages the pressure sensitive ink 1110 when a pressure is not applied to the plunger 1102.

FIG. 12 illustrates another example keypad apparatus 1200 capable of sensing a pressure. In this example, a film 1202 is disposed between a plunger 1204 and a dome sheet carrier 1206. In particular, the plunger 1204 is disposed on a first surface 1208 of the film 1202. The film 1202 of the illustrated example may be composed of, for example, a Polyethylene terephthalate (PET) material. The plunger 1204 may be deposited, printed, laminated, and/or otherwise coupled to the first surface 1208 of the film 1202. In some examples, the plunger 1204 is a UV-cured plastic coupled to the film 1202. The film 1202 also includes a pressure sensitive ink 1212 disposed on a second surface 1210 of the film 1202 opposite the first surface 1208. The film 1202 may be coupled to the dome sheet carrier 1206 via adhesive 1214. Alternatively, (although not shown) the pressure sensitive ink 1212 may be printed on the dome sheet carrier 1206. For example, the pressure sensitive ink 1212 may be printed on a first surface of the dome sheet carrier 1206 facing the dome and the plunger 1204 may be deposed on a second surface of the dome sheet carrier 1206 facing a keycap (e.g., the keycap 302). In that example, the film 1202 is not required.

In operation, when a keycap (not shown) is in an initial position as shown in FIG. 12, the plunger 1204 is in contact with the film 1202. However, absent a force applied to the plunger 1204, the plunger 1204 engages the film 1202 with a relatively small contact force, which causes the pressure sensitive ink 1212 to provide a relatively high resistive output. When a force is applied to the keycap, the plunger 1204 engages the film 1202 with a relatively greater force than when the plunger 1204 is in the initial position. For example, the film 1202 may bend or flex or otherwise detect a force when the plunger 1204 engages the film 1202 with a relatively larger force. As a result, the pressure sensitive ink 1212 provides a relatively low resistive output when a relatively large force is applied to the keycap. Such a change in resistive output enables the processor 102 to detect the location and/or the keycap associated with the plunger 1204 that is being depressed.

FIG. 13 illustrates yet another example keypad apparatus 1300 capable of sensing a pressure. The keypad apparatus 1300 is substantially similar to and operates or functions substantially similar to the keypad apparatus 1200 of FIG. 12. However, in this example, a plunger 1302 is disposed between a dome 1304 or a dome sheet carrier 1306 and a film 1308. A pressure sensitive ink may be disposed on a surface 1310 of the dome sheet carrier 1306 and/or surfaces 1312, 1314 of a film member 1308.

In operation, when a keycap (not shown) of the keypad apparatus 1300 is in an initial position as shown in FIG. 13, the plunger may contact or engage the film 1308 or the dome sheet carrier 1306 with a relatively small force, thereby causing the pressure sensitive ink disposed on the surface 1312 of the film 1308 or the surface 1310 of the dome sheet carrier 1306 to provide a relatively high resistive output. When a force is applied to a keycap of the keypad apparatus 1300 (e.g., when the keycap is partially depressed), the force is provided to the film 1312 and/or the dome sheet carrier 1306 via the plunger 1302. The increase in force causes the pressure sensitive ink disposed on the surface 1312 of the film 1308 or the surface 1310 of the dome sheet carrier 1306 to provide a relatively low resistive output. Such a change in resistive output enables the processor 102 to detect the location and/or the keycap that is being depressed.

FIG. 14 illustrates an example pressure sensor 1400 that can be used to implement a pressure sensor and/or the pressure sensors 438, 1006, 1108, 1212 and/or 1308 described above. In this example, the pressure sensor 1400 includes a trace pattern 1402 (e.g., a copper or gold plated traces) disposed on a substrate 1404 such as, for example, a film (e.g., a PET film), a flexible circuit board, a dome sheet carrier, an actuator of a keypad assembly, a keycap and/or any other suitable surface. The trace pattern 1402 provides a resistive element 1406 that is electrically coupled to a circuit via first and second traces 1408 and 1410. The first trace 1408 electrically couples a first resistive element 1412 (e.g., a positive charged resistive element) to a circuit and the second trace 1410 electrically couples a second resistive element 1414 (e.g., a negative charged resistive element) to the circuit. The trace pattern 1402 may be a matrix or grid formation (e.g., a XY grid) such that each resistive element 1406 of a plurality of resistive elements 1406 is associated with and/or corresponds to a respective keycap (e.g., a keycap 302) of a keypad apparatus (e.g., the keypad apparatus 300).

The pressure sensor 1400 includes a plunger 1416 associated with the first and second resistive elements 1412 and 1414 and is made of a pressure sensitive ink or material. In some examples, the plunger 1416 is a molded plastic having a pressure sensitive ink embedded with the plunger 1416. When a relatively low force is applied to the plunger 1416, the pressure sensitive ink in the plunger 1416 provides a relatively high resistance, causing the circuit to be an open circuit. However, when a relatively large force is applied to the plunger 1416, the pressure sensitive ink in the plunger 1416 provides a relatively low resistance, causing the circuit to complete or close. As a result, in the closed circuit, the resistive elements 1412 and 1414 provide a resistance output value that is significantly lower compared to the resistance output value provided when the circuit is open. As a result, a processor (e.g., the processor 102) can determine the location of the pressure applied to a particular keycap of a keypad assembly.

In other examples, the resistive elements 1412 and 1414 and/or the traces 1408 and 1410 may be composed of a pressure sensitive ink. The plunger 1416 may be composed of a rubber material or a plastic material and engages the pressure sensitive ink. For example, to change a resistance output provided by the pressure sensitive ink, the plunger 1416 increase or decrease a contact surface area on the pressure sensitive ink based on an amount of force or load provided to the plunger 1416. For example, when a force is applied to the plunger 1416, a contact surface or end of the plunger 1416 may deform or otherwise expand to engage the pressure sensitive ink with a relatively larger contact area or footprint compared to the area or footprint at which the contact surface engages the pressure sensitive ink when a force is not applied to the plunger 1416 When the plunger 1416 deforms to provide a greater contact surface area, for example, the plunger 1416 "shorts" or contacts a greater number of resistive elements (e.g., a plurality of resistive elements 1412 and 1414 disposed in parallel), causing the resistive output of the pressure sensor 1400 to significantly decrease (e.g., to form a closed circuit). When the contact surface area decreases, the plunger 1416 engages a fewer number of resistive elements 1412, 1414 causing the resistive output of the pressure sensor 1400 to significantly increase (e.g., to form an open circuit). Thus, an increase in contact area causes a resistance of the pressure sensitive ink to decrease and a decrease in contact area causes the resistance of the pressure sensitive ink to increase.

Alternatively, the resistive element 1406 may be provided by a pressure sensitive ink disposed or printed on a film or substrate. The film or substrate may bend, flex or otherwise detect a force applied to the film by the plunger 1416. An increase in force applied to the pressure sensitive ink by the plunger 1416 causes a resistance of the pressure sensor to decrease, and a decrease in force applied to the pressure sensitive ink by the plunger 1416 causes the resistance of the pressure sensor to increase.

The example keypad apparatus 300, 900, 1000, 1100, 1200 and 1300 described above provide multi-function keypad apparatus. As a result, the example keypad apparatus may be utilized with non-touch sensitive displays to reduce the cost of the electronic device 100. In addition, the example keypad apparatus 300 described herein provides different modes of operation. For example, the example keypad apparatus 300 enables a user to select one or more graphics presented on the display via a touchpad-like capability when the keypad apparatus is in the first mode of operation. For example, the keypad apparatus 300 may function as a touch pad or a mouse to enable a user (using his/her finger) to highlight and/or select a graphic presented by the display, an action which is detected by the touch sensor.

In response to the force detected on the key by the pressure sensor, the example keypad apparatus 300 provides the second mode of operation. This detection enables the portable electronic device 100 to determine that a user may scroll or navigate through one or more subcategories or subsystems of a selected or highlighted application in the first mode of operation. That is, a user may use his/her finger to highlight a graphic, an action which is detected by the touch sensor. Subsequently, when desiring to select or "click" the highlighted information, the user depresses the key using his/her finger. The depression of the key, which is due to, for example, the force of a user's finger, is detected by the pressure sensor 438 and registered as a selection. When the key is depressed to the intermediate position, the pressure sensor 438 generates a signal that is received and interpreted by the microprocessor 102. The touch may be detected via, for example, a separate detector circuit which triggers or causes the processor 102 to activate the first mode of operation.

Further, the keypad apparatus 300 provides touch sensing capability and/or pressure sensing capability without compromising haptic or tactile feedback provided by the dome switches. In a third mode of operation, the keypad apparatus 300 provides tactile feedback when a key is depressed to select a function associated with that particular key. In the third mode of operation, the keypad apparatus 300 allows a user to preview which key they are about to activate before the key activates. This function is similar to a touch panel implementation. Implementing pressure and/or touch sensing as described herein enables increased resolution compared to known capacitive touch sensing panels, as pressure inputs in the illustrated examples can be used further determine user intent.

The methods described herein may be carried out by software executed, for example, by the processor 102. Coding of software for carrying out such a method is within the scope of a person of ordinary skill in the art given the present description. A computer-readable medium having computer-readable code may be executed by at least one processor of the portable electronic device 100 to perform the methods described herein.

The present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A keypad apparatus comprising:
a dome-switch assembly having:
a dome aligned relative to a first trace pattern and a second trace pattern of a printed circuit board;
a key aligned with the dome, the key being depressible between an initial position, an intermediate position and a depressed position, wherein the key is to deflect the dome to electrically couple the first and second trace patterns when the key is in the depressed position;
a touch sensing film to detect a touch on a keycap of the key when the key is in the initial position; and
a pressure sensing film to detect a force on the keycap when the key is in the intermediate position.

2. The keypad apparatus of claim 1, wherein the touch sensing film comprises a capacitive sensor having a capacitance sensitive pattern that is associated with the key.

3. The keypad apparatus of claim 2, wherein the capacitance sensitive pattern provides a first capacitance output value when an object engages the keycap of the key and a second capacitance output value when the object is away from the keycap of the key, wherein the first capacitance output value is different than the second capacitance output value, or
wherein the capacitance sensitive pattern comprises a matrix having a plurality of traces disposed on the touch sensing film, or
wherein the touch sensing film comprises an Indium Tin Oxide film.

4. The keypad apparatus of claim 1, wherein the pressure sensing film includes a resistance sensitive pattern that is associated with the key, or wherein the pressure sensing film comprises a pressure sensitive ink printed on a dome sheet of the dome-switch assembly.

5. The keypad apparatus of claim 1, further comprising a puck disposed between the pressure sensing film and the dome, the puck comprising a material substantially similar to the material of the pressure sensing film.

6. The keypad apparatus of claim 1, wherein the touch sensing film and the pressure sensing film are disposed between an actuator associated with the keycap and the dome.

7. The keypad apparatus of claim 6, wherein the actuator is to directly contact the touch sensing film, and preferably the actuator deflects the touch sensing film and the pressure sensing film toward the dome when a keycap associated with the dome is in the depressed position.

8. The keypad apparatus of claim 1, further comprising an insulating material disposed between a first surface of the touch sensing film and the dome.

9. A keypad assembly comprising:
a dome-switch;
a pressure sensor disposed between a dome of the dome-switch and a keycap of the keypad assembly; and
a touch sensor disposed between the keycap and a printed circuit board.

10. The keypad assembly of claim 9, wherein a key associated with the dome-switch is movable between an initial position, an intermediate position and a depressible position.

11. The keypad assembly of claim 10, wherein the touch sensor is to detect a touch when the key is in the initial position and the dome-switch is not activated, or wherein the pressure sensor is to detect a force when the key is in the intermediate position and the dome-switch is not activated.

12. The keypad assembly of claim 9, wherein the touch sensor is directly coupled to the pressure sensor.

13. The keypad assembly of claim 9, further comprising an insulating material disposed between the touch sensor and the pressure sensor.

14. A keypad comprising:
a dome sheet having a plurality of domes disposed over a printed circuit board;
a pressure sensing ink printed on the dome sheet; and
a proximity sensing film disposed adjacent the pressure sensing ink between a keycap of the keypad and the printed circuit board.

15. The keypad of claim 14, further comprising an insulating material disposed between the pressure sensing ink and the proximity sensing film.
